# EUROPEAN PATENT SPECIFICATION

(11) **EP 4 020 938 B1**
(45) Date of publication and mention of the grant of the patent: **15.10.2025**
(21) Application number: 21198523.9
(22) Date of filing: 23.09.2021
(51) Int. Cl.: H04L 67/52, B60W 60/00, G08G 1/00, H04W 4/024, H04W 4/44, H04L 67/12

(54) **IMPROVED UTILIZATION OF AN AUTONOMOUS VEHICLE VIA ATTACHED EQUIPMENT**
VERBESSERTE NUTZUNG EINES AUTONOMEN FAHRZEUGS ÜBER ANGEBRACHTE AUSRÜSTUNG
UTILISATION AMÉLIORÉE D'UN VÉHICULE AUTONOME PAR L'INTERMÉDIAIRE D'UN ÉQUIPEMENT FIXÉ

(30) Priority: 22.12.2020 US 202017131660
(43) Date of publication of application: 29.06.2022
(73) Proprietor: Intel Corporation, Santa Clara, CA 95054 (US)
(72) Inventor: BUERKLE, Cornelius, 76137 Karlsruhe (DE); SCHOLL, Kay-Ulrich, 76316 Malsch (DE); OBORIL, Fabian, 75139 Karlsruhe (DE); PASCH, Frederik, 76137 Karlsruhe (DE)
(74) Representative: 2SPL Patentanwälte PartG mbB

(56) References cited:
- US-A1- 2018 203 463
- US-A1- 2020 341 467

## Description

### BACKGROUND

Mobility as a Service (MaaS) using fleets of automated vehicles is an important trend for the future of transportation systems. A large fleet of AVs can improve user experience when traveling, as the large fleet will reduce passenger wait times. However, this improved customer experience also incurs costs incurred when demand is less than the available supply, resulting in idle AVs that are not generating revenue. Thus, improved methods of AVs utilization are needed so as to provide a positive user experience during time periods of variable demand, while also ensuring efficient allocations of AVs to provide for a cost competitive solution.

Document US 2020/0341467 A1 relates to a delivery trailer to be hitched to an autonomous vehicle for autonomous delivery of packages. The delivery trailer includes sensors to provide data to the autonomous vehicle to which it is to overcome limitations caused by an occlusion of sensors on the autonomous vehicle by the trailer.

### BRIEF DESCRIPTION OF THE DRAWINGS

The present disclosure is illustrated by way of example and not limitation in the figures of the accompanying drawings, in which like references indicate similar elements and in which:
FIG. 1 is an overview diagram of an autonomous vehicle system that provides for the provision of accessory services via an autonomous vehicle.
FIG. 2 is a block diagram showing example structures of the service equipment and autonomous vehicle discussed above with respect to FIG. 1.
FIG. 3 is a process flow diagram illustrating operation of one or more of the example embodiments.
FIG. 4 is an example data flow diagram illustrating data flow in one or more example embodiments.
FIG. 5 shows example messages passed between service equipment and an autonomous vehicle in at least some of the disclosed embodiments.
FIG. 6 is a flowchart of a method for controlling an autonomous vehicle.
FIG. 7 is a flowchart of a method for controlling an autonomous vehicle.
FIG. 8 is a flowchart of a method for controlling an autonomous vehicle.
FIG. 9 is a flowchart of a method for controlling an autonomous vehicle.
FIG. 10 illustrates a block diagram of an example machine upon which any one or more of the techniques (e.g., methodologies or embodiments) discussed herein are performed.

### DETAILED DESCRIPTION

Investment in a relatively large fleet of vehicles can result in a generally improved user experience, as having the relatively large fleet works to ensure that vehicles are available to accommodate periods of peak demand. Thus, wait times during peak periods are reduced relative to smaller fleet sizes. This relatively larger fleet has an associated cost, which is partly manifested by a larger number of idle vehicles during off-peak demand periods. Idle vehicles represent inefficient allocation of capital, and lost profits.

The present disclosure recognizes that one potential use for idle vehicles is to enlist them in performance of other functions during off-peak hours. This multi-use vehicle strategy becomes more interesting when autonomous vehicles are considered. For example, to the extent autonomous vehicles can be configured to perform other services beyond traditional passenger ride hailing services, their utilization time can be increased by tasking them with traditional passenger ride hailing services during periods of demand for those services, and tasking them with other non-passenger related services during periods of low passenger ride hailing demand. Use of autonomous vehicles in this manner also has potential to significantly reduce cost burdens of municipalities. Municipalities commonly make large investments in high fixed cost specialized equipment that only operates during workday hours. By utilizing autonomous vehicles to perform at least some of these services, municipalities can reduce their investments in these areas, freeing up resources to serve their population in new ways.

Thus, the present disclosure contemplates the use of autonomous vehicles to perform other services beyond passenger ride hailing in order to increase the utilization of an autonomous vehicle fleet. Services contemplated include salting or spreading dirt on a roadway during winter driving conditions, road cleaning, street sweeping, school bus services, postal services, irrigation of road plantings, road repair, waste collection, storm drain maintenance, delivery services, or providing power. However, the disclosed embodiments are not limited to these examples.

To enable the delivery of these additional services, the disclosed embodiments consider attachment of additional equipment to an autonomous vehicle to provide additional capabilities that are sometimes necessary to perform certain services. For example, to perform snow removal services, additional equipment that forms a snowplow is attached, in some embodiments, to an autonomous vehicle. The additional equipment also includes at least one additional sensor, such as an imaging sensor, to assist the additional equipment in properly positioning the snowplow (with help from the autonomous vehicle) to accomplish the snow removal service. A snowplow is just one example. Other equipment provides for delivery of goods or mail, road repair, irrigation, or other services such as those discussed above.

The object of the invention is achieved by the subject-matter of the independent claims. Advantageous embodiments are defined in the dependent claims. Further examples are provided for facilitating the understanding of the invention.

Some of the disclosed embodiments also describe a computer based reservation service, that allows municipal (or other) customers/operators to schedule services with an autonomous vehicle fleet. A provider of services may operate a staging area for equipment storage. After a service is scheduled, an autonomous vehicle is scheduled to visit the staging area so that the additional equipment can be attached to it. In some cases, the attachment is accomplished autonomously. For example, the autonomous vehicle includes, in some embodiments, programming to facilitate identification of the additional equipment and navigation of the vehicle so as to couple the equipment to the vehicle. After attachment of the equipment to the AV, the AV navigates to the location where service is provided.

Some of the disclosed embodiments include a control hand off of the autonomous vehicle to the equipment itself. Thus, when the equipment is in control, the equipment determines any movement of the combined autonomous vehicle/equipment assembly. This movement is determined, in some embodiments, by input provided by sensors attached to the equipment and/or the autonomous vehicle. Thus, some embodiments contemplate a fusion of sensor data across the two devices in order to generate a comprehensive model of an environment in proximity to the combined autonomous vehicle/equipment "assembly." Once the equipment has completed its service or otherwise determines that it no longer requires control of the autonomous vehicle, the equipment releases control of the autonomous vehicle. The autonomous vehicle is then able to receive commands from other controllers, such as its onboard motion control system or an off-vehicle controller, such as an AV fleet controller.

One example service that is provided by one or more of the disclosed embodiments provides repair of roadway infrastructure. For example, some equipment is configured to repair potholes while being tailored behind a vehicle. To accomplish this service, in some embodiments, the vehicle travels to a reported location of where the repair is needed. To obtain a precise localization of the repair, the trailer is equipped with downward-facing sensors, at least in some embodiments. When the vehicle is within a predefined proximity of the repair site, in some embodiments, the equipment asserts control over the vehicle and, in some cases, navigates the vehicle/equipment assembly so as to precisely position the vehicle/equipment such that the equipment can accomplish the repair. In an example pothole filling embodiment, upon detection of the repair site, the equipment releases road filler and ensures that the surface is properly repaired.

Some embodiments classify services into at least two types. A first type of services is performable by the vehicle itself (e.g., a ride hailing service, a school bus service, etc.). These services require no special hardware. A second type of service requires an additional equipment, which includes specialized equipment to accomplish the service. In some embodiments, when the second type of service is provided, the vehicle and equipment share data, to accomplish the service. For example, the vehicle determines, in at least some embodiments, an environmental model based on input from its onboard sensors. The equipment also generates an environmental model based on input from its own onboard sensors. These two environmental models are then fused to form one comprehensive environmental model that benefits from the sensors and their perspectives as attached to each of the vehicle and equipment.

In some embodiments, the equipment includes one or more sensors specialized for a particular service. For example, a road repair service utilizes, in some embodiments, equipment includes at least one downward facing imaging sensor. The downward facing imaging sensor captures images. These images are analyzed and then an on-board hardware processor (e.g., the control system 202) identifies a repair site based on the images (e.g. a hole in the road). The on-board processor then determines any movement of the vehicle/equipment necessarily to properly position the equipment to perform the service. This determination is based, in some embodiments, on the environmental model discussed above, which may include data provided by the vehicle and/or the equipment. A command is then issued by the equipment to the vehicle to accomplish the necessarily repositioning.

In some embodiments, an off-vehicle monitoring service is provided. For example, some equipment includes video or other sensors, and data from the sensors is streamed over a network to a remote monitoring site. A remote operator is then able to view or observe aspects of this sensor data and, in some embodiments, provide control inputs to the to facilitate the service being performed.

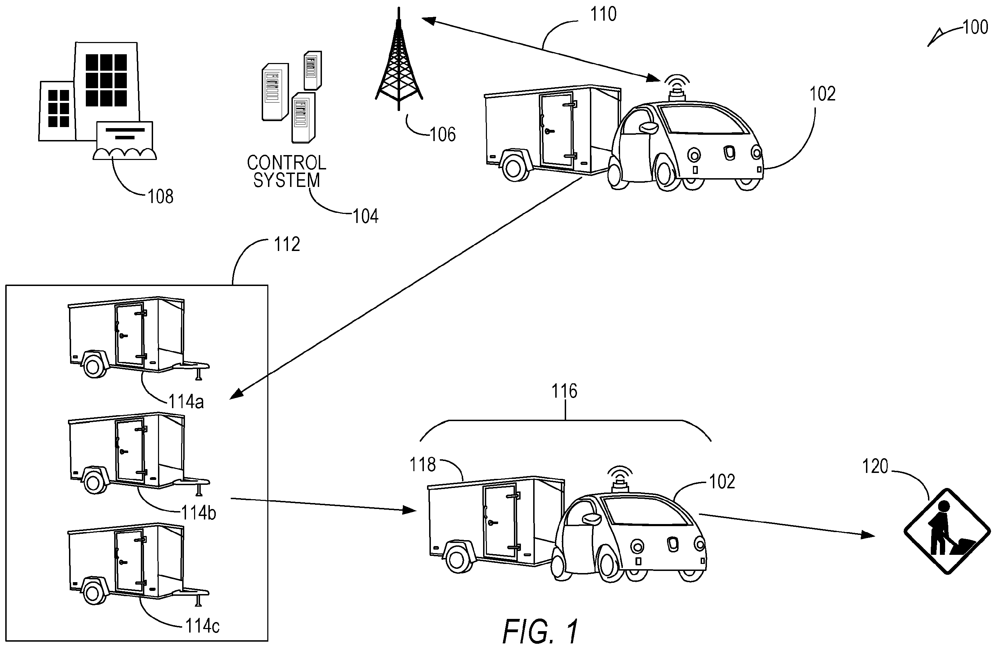

FIG. 1 is an overview diagram of an autonomous vehicle system 100 that provides for the provision of accessory services via an autonomous vehicle. FIG. 1 shows an autonomous vehicle 102 in communication with a mobility service 104 via a wireless communications network, including a wireless communications antenna 106. The mobility service 104 is owned and operated by a fleet operator 108. The fleet operator 108 receives a request to perform a service via an autonomous vehicle. As discussed above, the service can be any of a variety of services, including road repair, snow removal, irrigation, or other services. Via communication 110 with the mobility service 104, the AV 102 is commanded by the fleet operator 108 to travel to an equipment depot 112, where a plurality of additional equipment is stored. Examples of additional equipment is shown as equipment 114a, equipment 114b, and equipment 114c. While this equipment is visually represented as trailers having common form factors in FIG. 1, the additional equipment contemplated by the disclosed embodiments is configured in a variety of form factors to perform a variety of functions. While some equipment is towed behind an autonomous vehicle, other equipment mounts to a front, side, or top of the autonomous vehicle 102. Snowplow equipment, for example, mounts to a front of the autonomous vehicle 102 in at least some embodiments.

Upon arriving at the equipment depot 112, the AV 102 is joined or coupled with some additional equipment. In some embodiments, human assistance facilitates joining of the AV 102 with the equipment. In other embodiments, the AV 102 is programmed to maneuver in a manner so as to autonomously couple the AV 102 with the equipment. After a service is performed, decoupling of the AV 102 and the attached equipment is accomplished in a similar manner to the prior coupling.

Once the equipment and AV 102 are coupled, the assembly 116, including the service equipment 118 and the AV 102, travels to a site 120 where the service is performed.

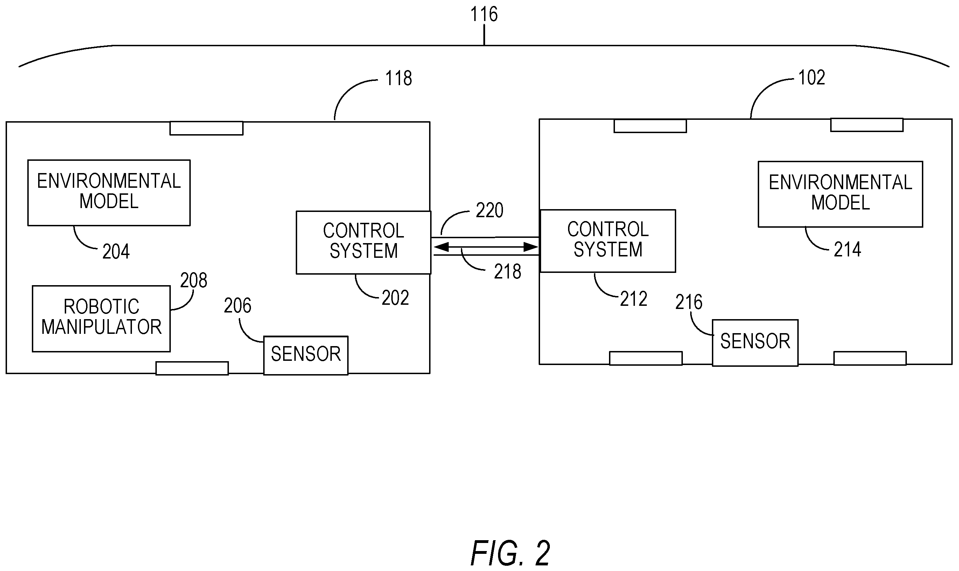

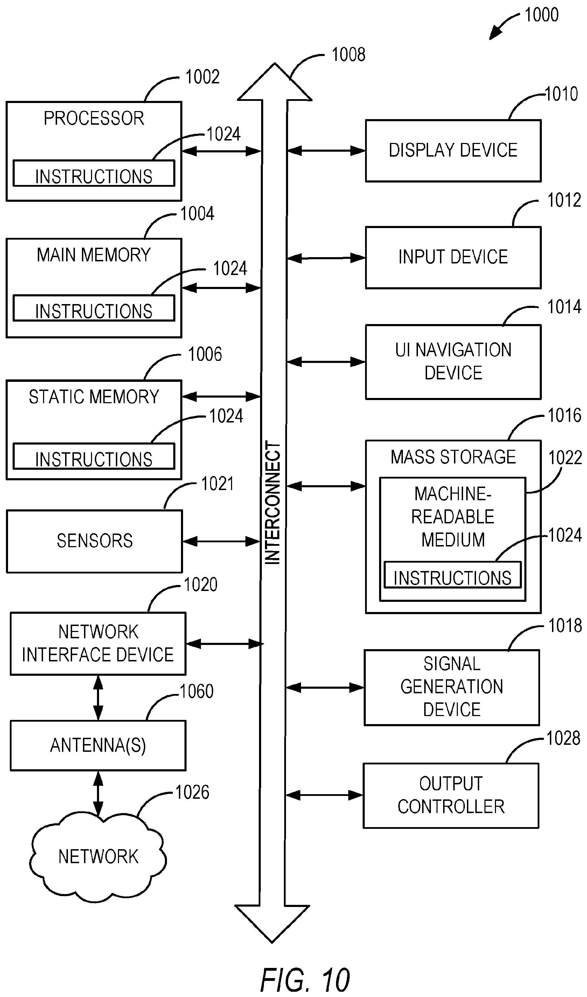

FIG. 2 is a block diagram showing example structures of the service equipment 118 and autonomous vehicle 102 discussed above with respect to FIG. 1. The service equipment 118 includes a control system 202, an environmental model 204, at least one sensor 206, and a robotic manipulator 208. The control system 202 includes computing circuitry to electronically control at least some aspects of the service equipment 118 and to communicate with the AV 102. One example structure of the control system 202 is discussed below with respect to FIG. 10 and the machine 1000. The environmental model 204 includes data representing a physical space within a proximity of the service equipment 118. In some embodiments, the control system 202 maintains a vector space representation of the environment in proximity to the service equipment 118, and updates the representation based on input from the sensor 206. Output from one or more sensors, including the sensor 206 indicates a characteristic of an environment proximate to the assembly 116 and/or the AV 102. Input from one or more sensors are used to recognize one or more objects within the environment, and to represent those objects as occupying the vector space in a position appropriate with respect to other recognized objects and the assembly 116.

The vector space representation of the environment is the environmental model in some embodiments. The control system 202 recognizes in some embodiments, objects included in the environment based on input from the sensor 206 and adds those objects and their respective location to the environmental model 204 (e.g. vector space). In some embodiments, the control system 202 receives additional environmental model data from the AV 102 (shown as environmental model 214, discussed below). The control system 202 then performs a fusion operation to provide a single representation of physical space proximate to the assembly 116 of the service equipment 118 and the AV 102. The robotic manipulator 208 takes a variety of forms depending on the environment, and can include multiple manipulators or a single manipulator in various embodiments. For example, equipment configured to repair roads includes, in some embodiments, at least one robotic manipulator to dig or modify a roadway surface. Such equipment includes, in some embodiments, a second robotic manipulator to control output of road filling material, such as asphalt. Other equipment configured to perform snow plowing services includes, in some embodiments, a robotic manipulator to adjust an angle of a snow output chute that controls a direction in which removed snow is thrown by the equipment after being removed. Some embodiments of snow removing equipment include a robotic manipulator to adjust an angle of a snowplow with the AV 102. These are just example of robotic manipulators and the disclosed embodiments are not limited to these examples. The control system 202 is configured with programming and other electronic control elements necessary to control the robotic manipulator 208 to accomplish the service for which the service equipment 118 is designed.

The AV 102 includes a control system 212, environmental model 214, and at least one sensor 216. One possible implementation of the control system 212 is described below with respect to FIG. 10 and the machine 1000. The control system 212 maintains the environmental model 214 based in input collected from the at least one sensor 216. As discussed above with respect to the service equipment 118, the environmental model 214 represents, in at least some embodiments, a vector space representation of an environment proximate to the AV 102. This representation includes, in some embodiments, one or more objects, identification of said objects, and the objects respective position within the environment.

The control system 212 performs functions to accomplish tasks associated with the AV 102. For example, the control system 212 is configured to navigate the AV 102 to a destination. The control system 202 of the service equipment 118 is in communication with the control system 212 of the AV 102 via a communication link 218. The communication link 218 is shown integrated with a physical coupling 220 between the service equipment 118 and AV 102, but in other embodiments, the communication link 218 is not physically integrated with the physical coupling 220 (e.g. in some embodiments, the communication link 218 is wireless).

The control system 202 and control system 212 communicate to share information and control of the assembly 116 including the service equipment 118 and the AV 102. For example, as discussed above, the control system 212 passes data representing the environmental model 214 to the control system 202 in some embodiments. In these embodiments, the control system 202 then processes the received data and fuses or integrates this environmental model data or other data derived from the environmental model data with its own environmental model 204. This includes, for example, adding an object recognized by a first of the environmental models (e.g. environmental model 214) to a second of the environmental models (e.g. environmental model 204). Similarly, the control system 202 passes, in some embodiments, at least a portion of environmental model 204 to the control system 212. The control system 212 then integrates or fuses the received data, or data derived from the received data, with the environmental model 214.

The control system 202 and control system 212 also communicate to coordinate control of the assembly 116. For example, the control system 212 hands-off, under certain situations, control of the assembly 116 to the control system 202. The control system 202 then relies on the environmental model 204 to determine any changes to a position of the assembly 116. To effect any change in position, the control system 202 relies on the AV 102 to act as a "tractor" or motion unit to reposition the assembly 116 such that the service equipment 118 is properly positioned to perform functions associated with a service.

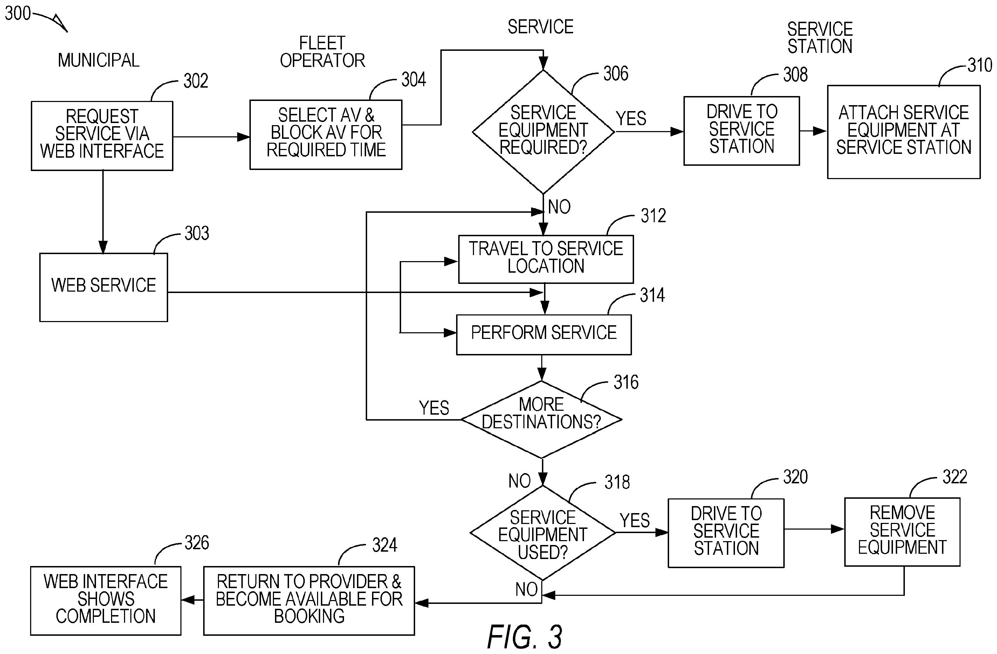

FIG. 3 is a process flow diagram illustrating operation of one or more of the disclosed embodiments. FIG. 3 begins in operation 302 with a request received by a municipal operator for service. The request for service could be a request for the municipal operator to perform a variety of functions. For example, in some embodiments, the request is a request to fill a pothole in a road. In other embodiments, the request is a request to install a temporary road sign. The request is communicated to a fleet operator, who, in operation 304, selects an autonomous vehicle to perform the request, and schedules the AV for a time period sufficient to satisfy or otherwise complete the request. After the AV is scheduled, the process flow moves to decision operation 306, which determines whether any additional equipment is necessary to fulfill the request (that is not already attached to the selected AV). In some cases, a trailer that is towed by the AV is needed to fulfill the request, while in other circumstances, the request can be completed via a different type of equipment that mounts to the AV itself (e.g., a snowplow or toolbox). If additional equipment needs to be mounted to the AV, the process 300 moves from decision operation 306 to operation 308, where the AV travels to a service station. Once the AV has arrived at the service station, process 300 moves from operation 308 to operation 310, where a trailer or other equipment (such as a toolbox) is attached to the AV. In some cases, the AV maneuverers itself to perform the attachment.

Alternatively, if decision operation 306 determines no additional equipment is necessary, process 300 moves from decision operation 306 to operation 312, where the AV drives to a next service destination. The next service destination in this context is a destination specified or otherwise indicated by the request from operation 302. After the AV arrives at the service location, process 300 moves from operation 312 to operation 314, where the service is performed. As discussed above, performing the service includes, in at least some embodiments, the equipment provides control inputs to the AV, for example, to position the AV such that the equipment can perform the service. After the service is completed, process 300 moves from operation 314 to decision operation 316, which determines whether additional destinations are planned for the AV. If additional destinations are planned, process 300 moves from decision operation 316 back to operation 312, and the AV travels to the next destination. Otherwise, process 300 moves from decision operation 316 to decision operation 318, which determines whether any attached equipment is still needed by the AV. If the attached equipment is no longer needed, process 300 moves from decision operation 318 to operation 320, where the AV travels to a service station. Upon arriving at the service station, process 300 moves from operation 320 to operation 322, where the equipment is removed. After operation 322 is complete, process 300 moves to operation 324.

If the equipment does not need to be removed, process 300 moves from decision operation 318 to operation 324, where the AV returns to the fleet operator and becomes available for booking. After operation 324 completes, process 300 moves from operation 324 to operation 326, where completion of the service request is indicated in the web interface referenced above with respect to operation 302.

FIG. 3 contemplates that a municipality implements a web service that allows the municipality to book and/or request a certain service, for example, via a web service 303 maintained by the municipality. Some embodiments provide access to this web service via a website accessible via a browser, while other embodiments provide clients with a mobile application. Some embodiments of this web service provide a list of available services, and a user is able to select a service from this list. The user then provides one or more destinations where the service should be performed, a time period during which the service should be performed and a priority of performing the service. The priority is considered by at least some embodiments when determining an order in which multiple services, which compete for resources, are performed.

Some embodiments provide status reports and/or alerts to the municipality. For example, when a service, scheduled via the web service, begins or ends operations, an alert is provided to the municipality. Some embodiments provide an interface that provides for monitoring of parts included in equipment (such as a toolbox or trailer). In some embodiments, a capability is provided to allow an operator to provide remote control of tools included with the equipment (e.g. emptying of a trash bin might not be accomplished autonomously if not properly positioned. Allowing for manual control might allow a human to handle exception conditions). This capability allows, in some embodiments, a robotic arm or other component of the equipment to reposition the trash bin such that the task can be accomplished successfully.

Once a service request is generated, a fleet operator (or a fleet operator system) selects a vehicle to perform the requested service in operation 304. In some embodiments, the selected vehicle is a robotaxi or autonomous vehicle. In some embodiments, the fleet operator determines a time period during which the service will be provided (e.g. some embodiments prioritize nighttime service or prioritize time periods that typically have idle vehicle capacity). A route for the vehicle to take when traveling to a service site is also determined in some embodiments of operation 304. In some embodiments, the fleet operator evaluates whether the selected vehicle can perform the service as currently configured (e.g. a school bus service), or if additional equipment is required (e.g. a snow plowing service). If additional equipment is necessary, the additional equipment is identified and reserved by the fleet operator. A route to perform the service then may also include moving the vehicle first to a depot location of the necessary additional equipment. Once at the depot location, the vehicle is attached to the additional equipment. The vehicle then travels from the depot location of the additional equipment to the service location.

In some embodiments, when a service time arrives, a trigger is sent to a selected vehicle, which causes the vehicle to begin moving along an assigned route (which is determined based on a current location of the vehicle in some embodiments).

In some embodiments, an operator combines multiple services (e.g. combining a ride hailing service with a route inspection service). Any impacts to the multiple services might be acceptable, for example, my modifying applicable prices and/or new conditions are negotiated with relevant partners.

In some embodiments, multiple services are combined to improve efficiency. Thus, the fleet operator assists the municipality in improving utilization of available resources, thus reducing costs and improving service.

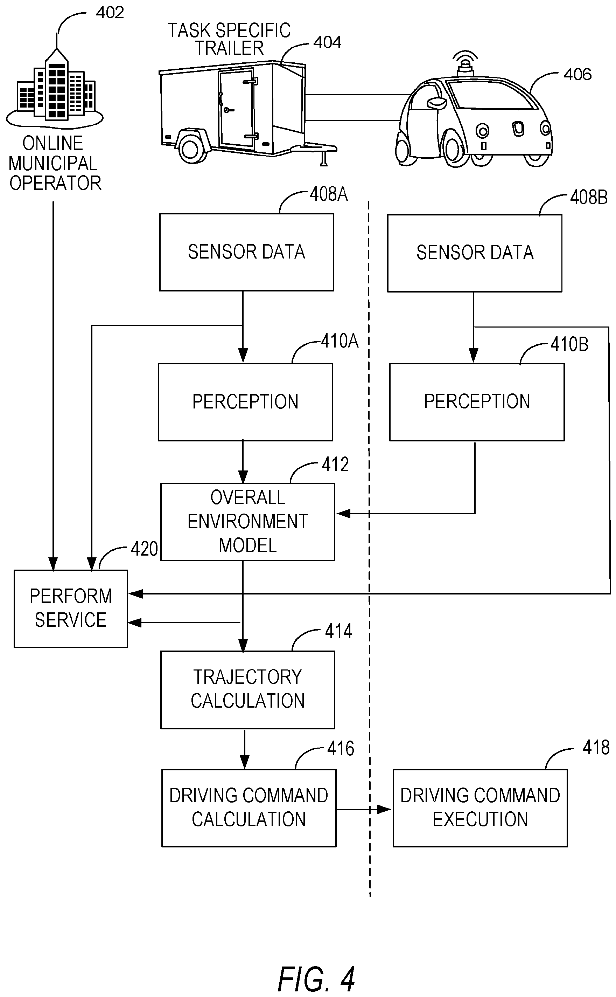

FIG. 4 shows an online municipal operator 402, a task specific equipment 404 (e.g. a trailer), and an AV 406. FIG. 4 shows that the equipment 404 generates sensor data 408A and the AV 406 generates sensor data 408B. Each of the sensor data 408A and 408B include data from one or more sensors, such as environmental sensors and/or internal sensors. The environmental sensors include, in various embodiments, one or more of imaging sensors, microphones, accelerometers, ambient light sensors, or other sensors. The internal sensors include, in various embodiments, one or more of a GPS satellite receiver, other positioning equipment, internal temperature sensors, or other sensors.

Each of the respective sensor data 408A and 408B are provided to respective perception engines 410A and 410B. The perception engines 410A and 410B perform, in some embodiments, object recognition based on the sensor data. Thus, output of each of the perception engines 410A and 410B includes, in various embodiments, data indicating object types identified based on the sensor data and/or locations of those identified objects within a three dimensional space representing an environment proximate to the equipment 404 and/or the AV 406. Data generated by each of the perception engines 410A and 410B is then used to build an environmental model 412. The environmental model 412 includes integrated perception data from both the perception engines 410A and 410B and provides a representation of the environment proximate to the equipment 404 and AV 406.

Based on the environmental model 412, the equipment 404 is able to perform trajectory calculations 414. The trajectory calculations 414 are, in some instances, for the equipment 404 itself, or for an appendage of the equipment, such as a robotic arm or other appendage. The equipment 404 then determines a driving command based on the trajectory calculation 414, and sends the command 416 to be executed via operation 418 by the AV 406. After the equipment 404 is properly positioned by the AV 406, the service is performed via operation 420.

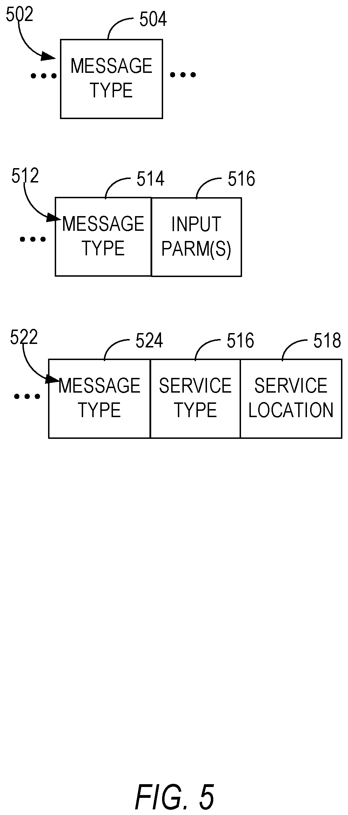

FIG. 5 shows example messages passed between the control system 202 and the control system 212 in at least some of the disclosed embodiments. FIG. 5 shows a message portion 502 including a message type field 504. The message type field 504 indicates, in at least some embodiments, via a predefined constant, the type of message, such as a first predefined constant indicating the message is communicating a hand-off of control from an AV (e.g. from the control system 212) to additional equipment (e.g. to the control system 202), or a second predefined constant that indicates the message is relinquishing control from the equipment (e.g. from the control system 202) to the AV (e.g. the control system 212).

FIG. 5 also shows a message portion 512, that includes a message type field 514 and an input parameter(s) field 516. The message type field 514 functions in a manner similar to that described above with respect to the message type field 504. One of a plurality of predefined constants are indicated in the message type field to indicate a type of message. In some embodiments, a predefined constant indicates the message portion 512 is a command to change position, with the command initiated by equipment attached to the AV and sent to an AV. The input parameter(s) field 516 indicates, in these messages, the new position to which the AV is commanded to move. Another predefined constant indicates the message portion 512 provides environmental model data (e.g. 504) to an AV. Another predefined constant indicates a message from an AV to additional equipment attached or coupled to the AV, and indicating the AV has reached a particular location. The location is indicated, in some embodiments, via the input parameter(s) field 516.

FIG. 5 also shows an example message portion 522. In some embodiments, communication between the control system 202 and the mobility service 104 includes the example message portion 522. The example message portion 522 includes message type field 524, service type field 516, and service location field 518. The message type field 524 indicates the type of message, such as a message to request service of a type specified by the service type field 516 at a location specified by the service location field 518. In some embodiments, the example message portion 522 is included in a message sent by the mobility service 104 to the control system 202, e.g. a mobility service commands service equipment to perform service at a given location.

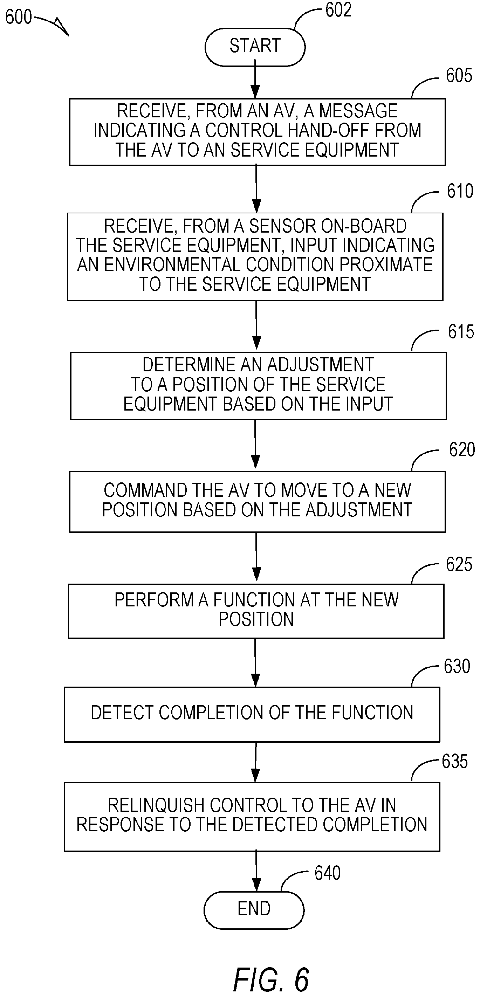

FIG. 6 is a flowchart of a method for controlling an autonomous vehicle. In some embodiments, one or more of the operations discussed below with respect to FIG. 6 and method 600 are performed by hardware processing circuitry. For example, in some embodiments, instructions (e.g. instructions 1024 below) stored in a memory (e.g. 1004 and/or 1006 below) configure one or more hardware processors (e.g. hardware processor 1002 below) to perform the one or more operations discussed below. In some embodiments, the method 600 is performed by additional equipment, such as the equipment 404 discussed above.

After start operation 602, the method 600 moves to operation 605, which receives, from an AV, a message indicating a control hand-off from the AV to additional equipment coupled to the AV. For example, in some embodiments, the message received in operation 605 includes one or more of the fields discussed above with respect to message portion 502. For example, a message type field 504 indicates, in some embodiments, the control hand-off.

In operation 610, input is received from a sensor that is on-board the equipment. For example, various embodiments of equipment include an imaging sensor, a robotic arm, a positioning sensor, or other sensors. The input indicates an environmental condition proximate to the equipment. For example, the input can include, in some embodiments, an image representing at least a portion of the environment proximate to the equipment. As one example, snowplow equipment images an environment in front of the snowplow, and uses said image to determine a proper route and/or position of the snowplow within the imaged environment. Alternatively, in embodiments of equipment that include a microphone, the input indicates a level of sound proximate to the equipment.

In operation 615, an adjustment to a position of the equipment is determined based on the input. For example, as discussed above, based on image information collected by an on-board sensor, the equipment determines, in some embodiments, an adjustment in its position that is necessary in order for the equipment to accomplish a function, such as filling a pothole or plowing snow from a road. For example, in some embodiments, the equipment determines the equipment needs to move 2 cm to the left to properly plow snow from a roadway.

In operation 620, the equipment sends a command to the AV. The command indicates the AV should change position so as to position the equipment as determined in operation 615. The equipment provides an offset from a current position of the equipment as a command to the AV (e.g. 2 cm in the example above). In some embodiments, the offset is relative to a coordinate system, and/or to an environmental model (e.g. 412) shared between the equipment and the AV. For example, the command indicates, in some embodiments, a new position of a reference point within a vector space included in the environmental model. The reference point is, in some embodiments, a well-known location of the AV and/or the equipment. The new position is indicated, in some embodiments, via one or more input parameters specified in the message, as described above with respect to input parameter(s) field 516 of message portion 512.

In operation 625, a function is performed at the new position. For example, a snowplow equipment plows snow at the new position. A snow blower equipment removes snow at the new position.

In operation 630, completion of the function is detected. For example, in some embodiments, the equipment images the environment to determine when its function has been completed. In embodiments of equipment that are designed to fill a pothole, the access device measures, in some embodiments, a surface of a roadway to determine when the roadway is level within a predefined tolerance level. When the equipment detects the roadway is level, and the pothole has been filled, completion is detected, at least in some embodiments.

In operation 635, control is relinquished by the equipment and returned to the AV. Some embodiments of operation 635 include sending a message to the AV indicating the relinquishment of control. For example, in some embodiments, a message including one or more of the fields discussed above with respect to message portion 502 is sent to the AV. The message type field 504 indicates, in some embodiments, that the equipment is relinquishing control.

After operation 635 completes, the method 600 moves to end operation 640.

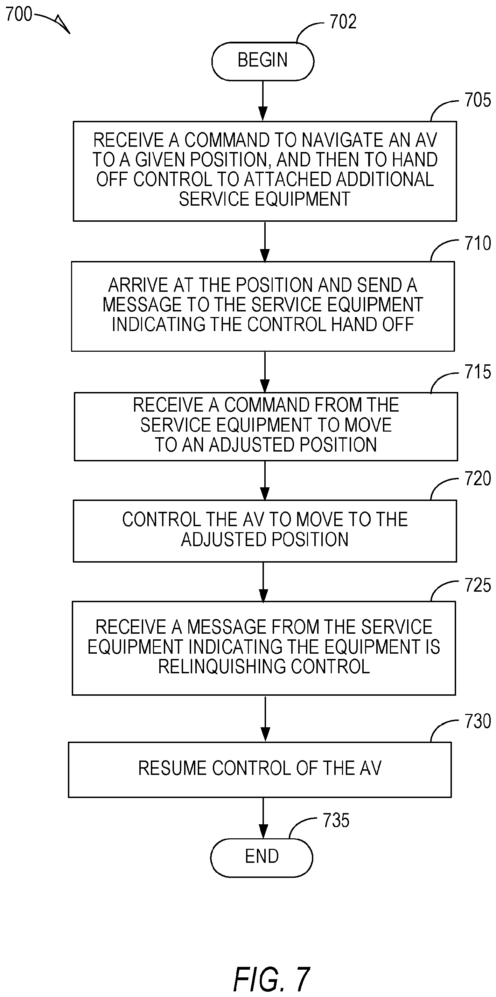

FIG. 7 is a flowchart of a method for controlling an autonomous vehicle. In some embodiments, one or more of the operations discussed below with respect to FIG. 7 and the method 700 are performed by hardware processing circuitry. For example, in some embodiments, instructions (e.g. instructions 1024 below) stored in a memory (e.g. 1004 and/or 1006 below) configure one or more hardware processors (e.g. hardware processor 1002 below) to perform the one or more operations discussed below with respect to FIG. 7. In some embodiments, the method 700 is performed by an AV, such as the AV 102 or AV 406 discussed above. In some embodiments, the method 700 is performed by the control system 212.

After start operation 702, the method 700 moves to operation 705, where a command is received to navigate an AV to a given position. The command also indicates, in some embodiments, that upon arrival at the given position, control of the AV is to be handed off to attached equipment. In some embodiments, the command to navigate is separate from the command to hand off. For example, in some embodiments, the two commands are received via different messages.

In operation 710, the AV arrives at the commanded given position and sends a message to the equipment indicating the control hand off. As discussed above with respect to FIG. 3, in some embodiments, operation 710 includes sending a message to the equipment similar or analogous to the message portion 502, discussed above with respect to FIG. 5. For example, the message type field 504 indicates, in some embodiments, the control hand-off from the AV to the equipment. In some embodiments, when the AV hands-off control to the equipment, it enters a state that causes the AV to inhibit executing commands from any other control entity. Thus, for example, while control is handed-off, the AV does not accept other motion control commands from its on-board motion controller, or any other off-board motion controllers. The inhibiting of execution of commands only applies, in at least some embodiments, to a portion of commands implemented by the AV. For example, the AV inhibits, in some embodiments, commands that would otherwise cause the AV to change its physical configuration or position, but still responds to status commands, for example.

In operation 715, the AV receives a command from the equipment. The command requests the AV to move to an adjusted position. In some embodiments, the adjusted position is specified relative to a shared environmental space, such as a vector space shared between the equipment and the AV (e.g. analogous to environmental model 412 discussed above with respect to FIG. 4). In some embodiments, the command of operation 715 is received via a message analogous to message portion 512, discussed above with respect to FIG. 5. For example, the message type field 514 indicates, in some embodiments, that the message includes a command to reposition or move the AV. The input parameter(s) field 516 indicate the new position in some of these embodiments.

In operation 720, the AV is controlled to move to the new or adjusted position specified by the command received in operation 715. Thus, operation 720 includes, in some embodiments, sending electronic comments to an electric motor, steering box, brakes, or other components of the AV to effect the change in position defined by the command.

In operation 725, a message is received from the equipment indicating that the equipment is relinquishing control. Thus, in some embodiments, the message received in operation 725 stops the inhibiting, by the AV, of execution of commands from other controllers.

In operation 730, control of the AV resumes. Thus, as discussed above, once control transfers from the equipment back to the AV, the AV, in some embodiments, executes commands initiated by other controllers, and/or its on-board systems, such as an on-board motion planning system. After operation 730 completes, the method 700 moves to end operation 735.

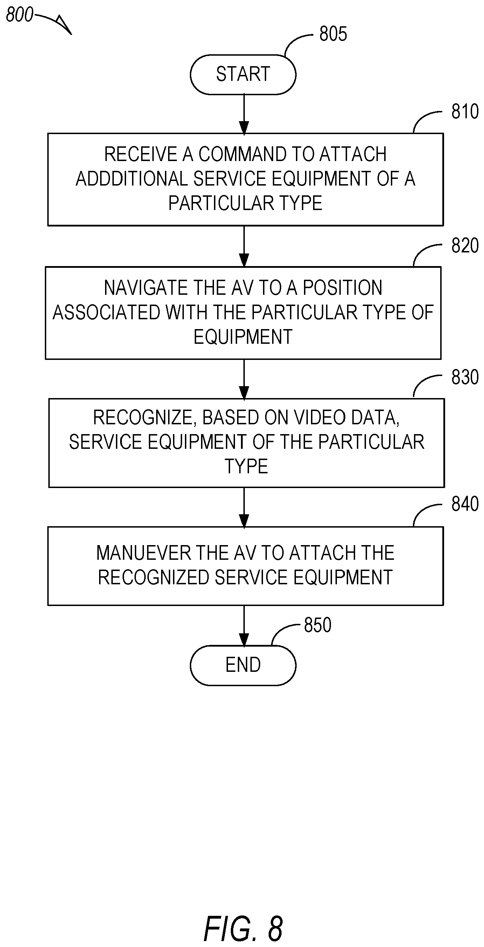

FIG. 8 is a flowchart of a method for controlling an autonomous vehicle. In some embodiments, one or more of the operations discussed below with respect to FIG. 8 and method 800 are performed by hardware processing circuitry. For example, in some embodiments, instructions (e.g. instructions 1024 below) stored in a memory (e.g. 1004 and/or 1006 below) configure one or more hardware processors (e.g. hardware processor 1002 below) to perform the one or more operations discussed below with respect to FIG. 8. In some embodiments, the method 800 is performed by an AV, such as the AV 102 or the AV 406 discussed above. For example, the method 800 is performed, in some embodiments, by the control system 212.

After start operation 805, the method 800 moves to operation 810, where a command is received to attach equipment of a particular type to the AV. In some embodiments, the command is received via a message that includes the message portion 512, discussed above with respect to FIG. 5. For example, the message type field 514 indicates, in some embodiments, the command to attach equipment. The input parameter(s) field 516 indicates, in some embodiments, one or more of a type of service equipment to attach, a location of the service equipment, an identifier of the service equipment (such as a barcode # affixed to the service equipment), or other parameters.

In operation 820, the AV navigates to a position or location associated with the service equipment. For example, as discussed above with respect to operation 810, in some embodiments, a message is received indicating the location of the service equipment. In other embodiments, the AV looks up in a database available via a wide area network, and based on an identifier of the service equipment, the location of the service equipment.

In operation 830, the AV recognizes the service equipment based on video data. For example, in some embodiments, the AV includes one or more imaging sensors that capture video data. The AV is configured to, upon arriving proximate to the additional equipment's location, analyze one or more images captured by the imaging device to detect the service equipment in the images. The AV is configured to then maneuver to attach the service equipment. In some embodiments, the AV maneuvers itself to align an attachment mechanism of the AV to a complementary attachment mechanism of the service equipment.

In operation 840, the AV is maneuvered to attach the recognized service equipment. After operation 840 completes, the method 800 moves to end operation 850.

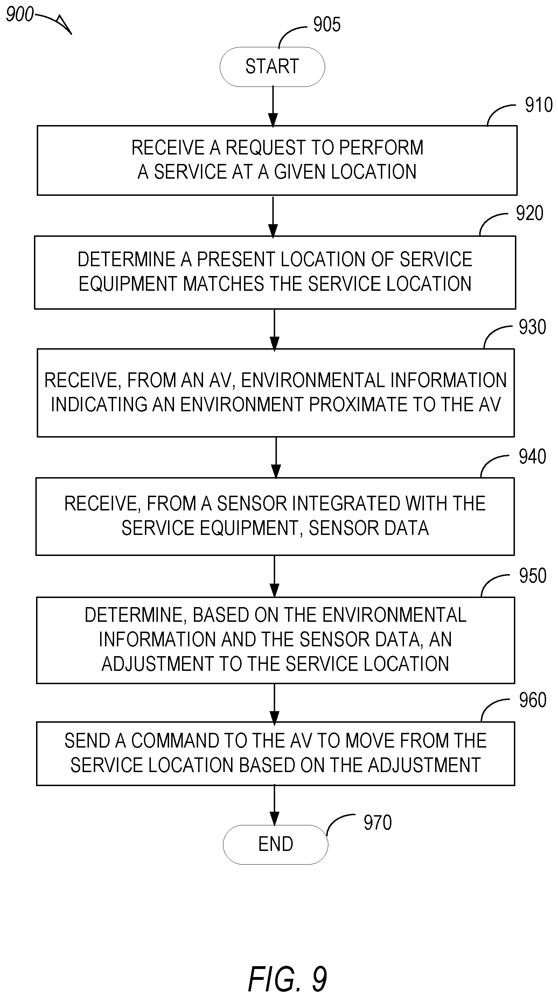

FIG. 9 is a flowchart of a method for controlling an autonomous vehicle. In some embodiments, one or more of the operations discussed below with respect to FIG. 9 and method 900 are performed by hardware processing circuitry. For example, in some embodiments, instructions (e.g. instructions 1024 below) stored in a memory (e.g. 1004 and/or 1006 below) configure one or more hardware processors (e.g. hardware processor 1002 below) to perform the one or more operations discussed below with respect to FIG. 9. In some embodiments, the method 800 is performed by service equipment, such as the service equipment 118 discussed above. For example, the method 900 is performed, in some embodiments, by the control system 202.

After start operation 905, method 900 moves to operation 910, where a request to perform a service at a given location is received. In some embodiments, the request is received by service equipment, such as the service equipment 118 discussed above with respect to FIG. 2. Specifically, the require is received, in some embodiments, via a communications network and processed by the control system 202, also discussed above with respect to FIG. 2. Some embodiments of operation 910 include decoding the request to identify a nature of the request, such as a type of service requested, and/or a location at which the service is to be provided. For example, as discussed above with respect to the example message portion 522, some embodiments provide for the control system 202 to receive a message including data analogous to one or more of the fields discussed above with respect to the example message portion 522.

In operation 920, a present location of service equipment is determined to match the service location. For example, in some embodiments, the service equipment 118 includes a positioning receiver that is able to determine the service equipment's position. Alternatively, in some embodiments, operation 920 includes receiving a message from an AV indicating that the service equipment is located at the service location. Operation 920 includes receiving a message from the AV indicating a control hand-off from the AV to the service equipment and/or control system 202. Such a control hand-off may generally occur, at least in some embodiments, when an AV has moved coupled service equipment to a service location.

In operation 930, environmental information indicating an environment proximate to the AV is received. Proximate to the AV refers to an area within a predefined distance of the AV, or within a range of sensors integrated with the AV. In some embodiments, the predefined distance is within .5 meters, one meter, two meters, three meters, four meters, five meters, ten meters, or some other distance. In some embodiments, each sensor integrated with the AV has a defined maximum range, beyond which any data obtained from the sensor is unreliable. Thus, some AV's limit any object detection to utilize data within the maximum range of sensors used to detect the object. In some embodiments, the environmental information includes sensor data obtained by the AV from sensors integrated with the AV itself. For example, in some embodiments, an AV includes one or more of an integrated imaging sensor, LIDAR sensor, RADAR sensor, or ultrasonic sensor. Thus, in some of these embodiments, the environmental information received from the AV includes sensor data received from one or more of sensors integrated with the AV.

As discussed above, in some embodiments, environmental data collected by an AV, via on-board sensors, is shared with service equipment coupled to the AV. In some embodiments, the service equipment integrates or fuses this environmental data and other environmental data collected from sensors integrated with the service equipment itself. In some embodiments, the environmental data represents a three dimensional vector space proximate to the AV and service equipment assembly. By integrating data collected from sensors on both platforms, a more comprehensive model of the surrounding environment is generated, providing for improved operation of the service equipment when performing tasks relating to accomplishing a particular service.

In operation 940, sensor data from a sensor integrated with the service equipment is received or obtained. For example, as discussed above, the service equipment includes one or more sensors, which can include one or more of an imaging sensor, LIDAR sensor, a RADAR sensor, an audio sensor, a positioning sensor (e.g. GPS sensor), or some other sensor. Operation 940 reads data collected from these one or more sensors, which indicate one or more characteristics of an area proximate to (e.g. within a predefined distance of the service equipment, or within a sensing range of the one or more sensors) the service equipment.

In operation 950, an adjustment to the service location is determined based on the environmental data received from the AV and sensor data obtained from one or more sensors integrated with the service equipment itself. Service equipment performs data fusion of environmental data received from the AV and environmental data derived from one or more sensors integrated with the service equipment. For example, in some embodiments, the service equipment includes computer processing power sufficient to generate an environmental model based on one or more sensors of the service equipment itself. This environmental model is integrated with an environmental model indicated by the environmental data received from the AV, to provide a wholistic environmental model that represents an area larger than and/or with a higher resolution than, the environmental model generated by the service equipment alone or the AV alone.

In some other embodiments, sensor data obtained from one or more sensors of the service equipment is uploaded or otherwise provided to the AV via a communication link with the AV. The AV then performs the fusion of data between the AV and service equipment, and generates the comprehensive environmental model. The service equipment then obtains access to this AV generated environmental model in order to perform its service.

In operation 960, a command is sent, by the service equipment (e.g. control system 202) to the AV. The command indicates the AV should move to a new location. The new location is based on the adjustment determined in operation 950 (e.g. original service location + adjustment = new location). The service equipment generates the command to provide an offset from a current position of the service equipment (e.g. move two cm in a particular direction relative to a coordinate axis of the shared environmental model). In some embodiments, the offset is relative to a coordinate system, and/or to an environmental model (e.g. 412) shared between the equipment and the AV. For example, the command indicates, in some embodiments, a new position of a reference point within a vector space included in the environmental model. The reference point is, in some embodiments, a well-known location of the AV and/or the service equipment. The new position is indicated, in some embodiments, via one or more input parameters specified in the message, as described above with respect to input parameter(s) field 516 of message portion 512.

The service equipment performs a function once it has been relocated to the new position by the AV. For example, a snowplow equipment plows snow at the new position. A snow blower equipment removes snow at the new position.

Method 900 detects completion of the function. For example, in some embodiments, the service equipment images the environment to determine when its function has been completed. In embodiments of service equipment or the control system 202 that are designed to fill a pothole, the control system 202 measures, in some embodiments, a surface of a roadway to determine when the roadway is level within a predefined tolerance level. When the service equipment 118 or control system 202 detects the roadway is level, and the pothole has been filled, completion is detected, at least in some embodiments.

Control of the AV/service equipment assembly is relinquished by the service equipment and returned to the AV in response to detection of the completion. Relinquishing control includes sending a message to the AV indicating the relinquishment of control. For example, in some embodiments, a message including one or more of the fields discussed above with respect to message portion 502 is sent to the AV. The message type field 504 indicates, in some embodiments, that the equipment is relinquishing control.

Some embodiments of method 900 include controlling one or more features of the AV via the service equipment. For example, in some embodiments, the service equipment (e.g. via control system 202) commands the AV to change an illumination level of one or more lights of the AV. The service equipment commands the AV, in some embodiments, to enable or disable its flashers. For example, upon completion of a service, the service equipment commands, in some embodiments, the AV to disable its flashers.

After operation 960 completes, method 900 moves to end operation 970.

FIG. 10 illustrates a block diagram of an example machine 1000 upon which any one or more of the techniques (e.g., methodologies) discussed herein may perform. Machine (e.g., computer system) 1000 may include a hardware processor 1002 (e.g., a central processing unit (CPU), a graphics processing unit (GPU), a hardware processor core, or any combination thereof), a main memory 1004 and a static memory 1006, some or all of which may communicate with each other via an interlink 1008 (e.g., bus). In some embodiments, the example machine 1000 is implemented by one or more of the mobility service 104, the control system 202 and/or the control system 212.

Specific examples of main memory 1004 include Random Access Memory (RAM), and semiconductor memory devices, which may include, in some embodiments, storage locations in semiconductors such as registers. Specific examples of static memory 1006 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

The machine 1000 may further include a display device 1010, an input device 1012 (e.g., a keyboard), and a user interface (UI) navigation device 1014 (e.g., a mouse). In an example, the display device 1010, input device 1012 and UI navigation device 1014 may be a touch screen display. The machine 1000 may additionally include a mass storage device 1016 (e.g., drive unit), a signal generation device 1018 (e.g., a speaker), a network interface device 1020, and one or more sensors 1021, such as a global positioning system (GPS) sensor, compass, accelerometer, or other sensor. The machine 1000 may include an output controller 1028, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.). In some embodiments the hardware processor 1002 and/or instructions 1024 may comprise processing circuitry and/or transceiver circuitry.

The mass storage device 1016 may include a machine readable medium 1022 on which is stored one or more sets of data structures or instructions 1024 (e.g., software) embodying or utilized by any one or more of the techniques or functions described herein. The instructions 1024 may also reside, completely or at least partially, within the main memory 1004, within static memory 1006, or within the hardware processor 1002 during execution thereof by the machine 1000. In an example, one or any combination of the hardware processor 1002, the main memory 1004, the static memory 1006, or the mass storage device 1016 constitutes, in at least some embodiments, machine readable media.

Specific examples of machine readable media include, one or more of non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine readable medium 1022 is illustrated as a single medium, the term "machine readable medium" includes, in at least some embodiments, a single medium or multiple media (e.g., a centralized or distributed database, and/or associated caches and servers) configured to store the one or more instructions 1024.

An apparatus of the machine 1000 includes, in at least some embodiments, one or more of a hardware processor 1002 (e.g., a central processing unit (CPU), a graphics processing unit (GPU), a hardware processor core, or any combination thereof), a main memory 1004 and a static memory 1006, sensors 1021, network interface device 1020, antennas 1060, a display device 1010, an input device 1012, a UI navigation device 1014, a mass storage device 1016, instructions 1024, a signal generation device 1018, and an output controller 1028. The apparatus is configured, in at least some embodiments, to perform one or more of the methods and/or operations disclosed herein. The apparatus is, in some embodiments, a component of the machine 1000 to perform one or more of the methods and/or operations disclosed herein, and/or to perform a portion of one or more of the methods and/or operations disclosed herein. In some embodiments, the apparatus includes, in some embodiments, a pin or other means to receive power. In some embodiments, the apparatus includes power conditioning hardware.

The term "machine readable medium" includes, in some embodiments, any medium that is capable of storing, encoding, or carrying instructions for execution by the machine 1000 and that cause the machine 1000 to perform any one or more of the techniques of the present disclosure, or that is capable of storing, encoding or carrying data structures used by or associated with such instructions. Non-limiting machine readable medium examples include solid-state memories, and optical and magnetic media. Specific examples of machine readable media include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media includes non-transitory machine readable media. In some examples, machine readable media includes machine readable media that is not a transitory propagating signal.

The instructions 1024 are further transmitted or received, in at least some embodiments, over a communications network 1026 using a transmission medium via the network interface device 1020 utilizing any one of a number of transfer protocols (e.g., frame relay, internet protocol (IP), transmission control protocol (TCP), user datagram protocol (UDP), hypertext transfer protocol (HTTP), etc.). Example communication networks include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}), IEEE 802.15.4 family of standards, a Long Term Evolution (LTE) 4G or 5G family of standards, a Universal Mobile Telecommunications System (UMTS) family of standards, peer-to-peer (P2P) networks, satellite communication networks, among others.

In an example embodiment, the network interface device 1020 includes one or more physical jacks (e.g., Ethernet, coaxial, or phone jacks) or one or more antennas to connect to the communications network 1026. In an example embodiment, the network interface device 1020 includes one or more antennas 1060 to wirelessly communicate using at least one of single-input multiple-output (SIMO), multiple-input multiple-output (MIMO), or multiple-input single-output (MISO) techniques. In some examples, the network interface device 1020 wirelessly communicates using Multiple User MIMO techniques. The term "transmission medium" shall be taken to include any intangible medium that is capable of storing, encoding or carrying instructions for execution by the machine 1000, and includes digital or analog communications signals or other intangible medium to facilitate communication of such software.

At least some example embodiments, as described herein, include, or operate on, logic or a number of components, modules, or mechanisms. Modules are tangible entities (e.g., hardware) capable of performing specified operations and are configured or arranged in a certain manner. In an example, circuits are arranged (e.g., internally or with respect to external entities such as other circuits) in a specified manner as a module. In an example, the whole or part of one or more computer systems (e.g., a standalone, client or server computer system) or one or more hardware processors are configured by firmware or software (e.g., instructions, an application portion, or an application) as a module that operates to perform specified operations. In an example, the software resides on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, in some embodiments, the general-purpose hardware processor is configured as respective different modules at different times. Software accordingly configures a hardware processor, for example, to constitute a particular module at one instance of time and to constitute a different module at a different instance of time.

Some embodiments are implemented fully or partially in software and/or firmware. This software and/or firmware takes the form of instructions contained in or on a non-transitory computer-readable storage medium, in at least some embodiments. Those instructions are then read and executed by one or more hardware processors to enable performance of the operations described herein, in at least some embodiments. The instructions are in any suitable form, such as but not limited to source code, compiled code, interpreted code, executable code, static code, dynamic code, and the like. Such a computer-readable medium includes any tangible non-transitory medium for storing information in a form readable by one or more computers, such as but not limited to read only memory (ROM); random access memory (RAM); magnetic disk storage media; optical storage media; flash memory, etc.

At least some examples, as described herein, include, or operate on, logic or a number of components, modules, or mechanisms. Modules are tangible entities (e.g., hardware) capable of performing specified operations and are configured or arranged in a certain manner. In an example, circuits are arranged (e.g., internally or with respect to external entities such as other circuits) in a specified manner as a module. In an example, the whole or part of one or more computer systems (e.g., a standalone, client or server computer system) or one or more hardware processors are configured by firmware or software (e.g., instructions, an application portion, or an application) as a module that operates to perform specified operations. In an example, the software resides on a machine readable medium. In an example, the software, when executed by the underlying hardware of the module, causes the hardware to perform the specified operations.

Various embodiments may be implemented fully or partially in software and/or firmware. This software and/or firmware may take the form of instructions contained in or on a non-transitory computer-readable storage medium. Those instructions are then read and executed by one or more processors to enable performance of the operations described herein. The instructions are in any suitable form, such as but not limited to source code, compiled code, interpreted code, executable code, static code, dynamic code, and the like. Such a computer-readable medium includes, in at least some embodiments, any tangible non-transitory medium for storing information in a form readable by one or more computers, such as but not limited to read only memory (ROM); random access memory (RAM); magnetic disk storage media; optical storage media; flash memory, etc.

## Claims

1. A computing apparatus (202; 1000), comprising:
hardware processing circuitry (1002); and
one or more hardware memories (1004; 1006) storing instructions that when executed configure the hardware processing circuitry (1002) to perform operations comprising:
receiving a request from a mobility service to perform a service at a service location (120);
determining that a present location of service equipment (118; 404) attached to an autonomous vehicle, AV (102; 406), matches the service location (120);receiving a first message from the AV (102; 406), the first message indicating a control hand-off from the AV (102; 406) to the computing apparatus (202; 1000);
receiving, from the AV (102; 406), environmental information indicating an environment proximate to the AV (102; 406);
receiving, from a sensor (206) integrated with the service equipment (118; 404), sensor data (408A);
fusing data derived from the environmental information and the sensor data (408A);
determining, based on the fused data, a position-adjustment to the service location (120), wherein the determination of the position-adjustment is in response to the control hand-off;
sending a command to the AV (102; 406) to move from the service location (120) to a new location based on the position-adjustment;
detecting completion of a task related to the service; and
sending a second message to the AV (102; 406), the second message indicating the computing apparatus (202; 1000) is relinquishing control of the AV (102; 406), wherein the sending of the second message is in response to the detected completion.

2. The computing apparatus (202; 1000) of claim 1, the operations further comprising receiving a command from the mobility service, and executing the received command.

3. The computing apparatus (202; 1000) of claim 2, wherein the command requests the service equipment to provide sensor data to the mobility service, and executing the received command comprises sending the sensor data to the mobility service.

4. The computing apparatus (202; 1000) of any one of the previous claims, wherein the environment information defines an environmental model, the environmental model defining objects occupying a vector space, the vector space representing an area proximate to the AV, the operations further comprising adding an object to the vector space based on the sensor data, wherein the determination of the adjustment is based on vector space including the added object.

5. The computing apparatus (202; 1000) of any one of the previous claims, the operations further comprising powering down the sensor in response to the relinquishing control and powering up the sensor in response to the control hand-off.

6. The computing apparatus (202; 1000) of one of the previous claims, the operations further comprising sending a command to the AV to change an illumination level of one or more lights on the AV.

7. At least one non-transitory computer readable medium comprising instructions that when executed configure hardware processing circuitry (1002) of a computing apparatus (202; 1000) to perform operations comprising:
receiving a request from a mobility service to perform a service at a service location (120);
determining that a present location of service equipment (118; 404) attached to an autonomous vehicle, AV (102; 406), matches the service location (120);
receiving a first message from the AV (102; 406), the first message indicating a control hand-off from the AV (102; 406) to the computing apparatus (202; 1000);
receiving, from the AV (102; 406), environmental information indicating an environment proximate to the AV (102; 406);
receiving, from a sensor (206) integrated with the service equipment (118; 404), sensor data (408A);
fusing data derived from the environmental information and the sensor data (408A);
determining, based on the fused data, a position-adjustment to the service location (120), wherein the determination of the position-adjustment is in response to the control hand-off; and
sending a command to the AV (102; 406) to move from the service location (120) to a new location based on the position-adjustment;
detecting completion of a task related to the service;
sending a second message to the AV (102; 406), the second message indicating the computing apparatus (202; 1000) is relinquishing control of the AV (102; 406), wherein the sending of the second message is in response to the detected completion.

8. The at least one non-transitory computer readable medium of claim 7, the operations further comprising receiving a command from the mobility service, and executing the received command.

9. The at least one non-transitory computer readable medium of claim 8, wherein the command requests the service equipment to provide sensor data to the mobility service, and executing the received command comprises sending the sensor data to the mobility service.

10. The at least one non-transitory computer readable medium of one of the claims 7-9, the operations further comprising fusing data derived from the environmental information and the sensor data, wherein the determination of the adjustment is based on the fused data.

11. A method (900) performed by hardware processing circuitry of a computing apparatus, comprising:
receiving (910) a request from a mobility service to perform a service at a service location (120);
determining (920) that a present location of service equipment (118; 404) attached to an autonomous vehicle, AV (102; 406), matches the service location (120);
receiving a first message from the AV (102; 406), the first message indicating a control hand-off from the AV (102; 406) to the computing apparatus (202; 1000);
receiving (930), from the AV (102; 406), environmental information indicating an environment proximate to the AV (102; 406);
receiving (940), from a sensor (206) integrated with the service equipment (118; 404), sensor data (408A);
fusing data derived from the environmental information and the sensor data (408A);
determining (950), based on the fused data, a position-adjustment to the service location (120), wherein the determination of the position-adjustment is in response to the control hand-off;
sending (960) a command to the AV (102; 406) to move from the service location (120) to a new location based on the position-adjustment;
detecting completion of a task related to the service; and
sending a second message to the AV (102; 406), the second message indicating the computing apparatus (202; 1000) is relinquishing control of the AV (102; 406), wherein the sending of the second message is in response to the detected completion.

## Patentansprüche

1. Recheneinrichtung (202, 1000), die Folgendes umfasst:
eine Hardwareverarbeitungsschaltungsanordnung (1002);
und
einen oder mehrere Hardwarespeicher (1004; 1006), die Anweisungen speichern, die bei Ausführung die Hardwareverarbeitungsschaltungsanordnung (1002) zum Durchführen von Operationen konfigurieren, die Folgendes umfassen:
Empfangen einer Anforderung von einem Mobilitätsdienst zum Durchführen eines Dienstes an einem Dienststandort (120);
Bestimmen, dass ein aktueller Standort einer Dienstausrüstung (118; 404), die an einem autonomen Fahrzeug, AV (102; 406), angebracht ist, mit dem Dienststandort (120) übereinstimmt; Empfangen einer ersten Nachricht von dem AV (102; 406), wobei die erste Nachricht eine Steuerübergabe von dem AV (102; 406) an die Recheneinrichtung (202; 1000) angibt;
Empfangen, von dem AV (102; 406), von Umgebungsinformationen, die eine Umgebung in der Nähe des AV (102; 406) angeben;
Empfangen von Sensordaten (408A) von einem in der Dienstausrüstung (118; 404) integrierten Sensor (206);
Fusionieren von aus den Umgebungsinformationen und den Sensordaten (408A) abgeleiteten Daten;
Bestimmen, basierend auf den fusionierten Daten, einer Positionsanpassung an dem Dienststandort (120), wobei die Bestimmung der Positionsanpassung als Reaktion auf die Steuerübergabe erfolgt;
Senden eines Befehls an das AV (102; 406) zur Bewegung von dem Dienststandort (120) zu einem neuen Standort basierend auf der Positionsanpassung;
Detektieren des Abschlusses einer Aufgabe in Bezug auf den Dienst; und
Senden einer zweiten Nachricht an das AV (102; 406), wobei die zweite Nachricht angibt, dass die Recheneinrichtung (202; 1000) die Steuerung des AV (102; 406) aufgibt, wobei das Senden der zweiten Nachricht als Reaktion auf den detektierten Abschluss erfolgt.

2. Recheneinrichtung (202; 1000) nach Anspruch 1, wobei die Operationen ferner Empfangen eines Befehls von dem Mobilitätsdienst und Ausführen des empfangenen Befehls umfassen.

3. Recheneinrichtung (202; 1000) nach Anspruch 2, wobei der Befehl die Dienstausrüstung auffordert, dem Mobilitätsdienst Sensordaten bereitzustellen, und das Ausführen des empfangenen Befehls Senden der Sensordaten an den Mobilitätsdienst umfasst.

4. Recheneinrichtung (202; 1000) nach einem der vorhergehenden Ansprüche, wobei die Umgebungsinformationen ein Umgebungsmodell definieren, wobei das Umgebungsmodell Objekte definiert, die einen Vektorraum einnehmen, wobei der Vektorraum einen Bereich in der Nähe des AV repräsentiert, wobei die Operationen ferner Hinzufügen eines Objekts zu dem Vektorraum basierend auf den Sensordaten umfassen, wobei die Bestimmung der Anpassung auf einem Vektorraum basiert, der das hinzugefügte Objekt aufweist.

5. Recheneinrichtung (202; 1000) nach einem der vorhergehenden Ansprüche, wobei die Operationen ferner Herunterfahren des Sensors als Reaktion auf das Aufgeben der Steuerung und Hochfahren des Sensors als Reaktion auf die Steuerübergabe umfassen.

6. Recheneinrichtung (202; 1000) nach einem der vorhergehenden Ansprüche, wobei die Operationen ferner Senden eines Befehls an das AV zum Ändern einer Leuchtstärke einer oder mehrerer Leuchten an dem AV umfassen.

7. Nichtflüchtiges computerlesbares Medium bzw. nichtflüchtige computerlesbare Medien, umfassend Anweisungen, die bei Ausführung eine Hardwareverarbeitungsschaltungsanordnung (1002) einer Recheneinrichtung (202; 1000) zum Durchführen von Operationen konfigurieren, die Folgendes umfassen:
Empfangen einer Anforderung von einem Mobilitätsdienst zum Durchführen eines Dienstes an einem Dienststandort (120);
Bestimmen, dass ein aktueller Standort einer Dienstausrüstung (118; 404), die an einem autonomen Fahrzeug, AV (102; 406), angebracht ist, mit dem Dienststandort (120) übereinstimmt;
Empfangen einer ersten Nachricht von dem AV (102; 406), wobei die erste Nachricht eine Steuerübergabe von dem AV (102; 406) an die Recheneinrichtung (202; 1000) angibt;
Empfangen, von dem AV (102; 406), von Umgebungsinformationen, die eine Umgebung in der Nähe des AV (102; 406) angeben;
Empfangen von Sensordaten (408A) von einem in der Dienstausrüstung (118; 404) integrierten Sensor (206);
Fusionieren von aus den Umgebungsinformationen und den Sensordaten (408A) abgeleiteten Daten;
Bestimmen, basierend auf den fusionierten Daten, einer Positionsanpassung an dem Dienststandort (120), wobei die Bestimmung der Positionsanpassung als Reaktion auf die Steuerübergabe erfolgt; und
Senden eines Befehls an das AV (102; 406) zur Bewegung von dem Dienststandort (120) zu einem neuen Standort basierend auf der Positionsanpassung;
Detektieren des Abschlusses einer Aufgabe in Bezug auf den Dienst;
Senden einer zweiten Nachricht an das AV (102; 406), wobei die zweite Nachricht angibt, dass die Recheneinrichtung (202; 1000) die Steuerung des AV (102; 406) aufgibt, wobei das Senden der zweiten Nachricht als Reaktion auf den detektierten Abschluss erfolgt.

8. Nichtflüchtiges computerlesbares Medium bzw. nichtflüchtige computerlesbare Medien nach Anspruch 7, wobei die Operationen ferner Empfangen eines Befehls von dem Mobilitätsdienst und Ausführen des empfangenen Befehls umfassen.

9. Nichtflüchtiges computerlesbares Medium bzw. nichtflüchtige computerlesbare Medien nach Anspruch 8, wobei der Befehl die Dienstausrüstung auffordert, dem Mobilitätsdienst Sensordaten bereitzustellen, und das Ausführen des empfangenen Befehls Senden der Sensordaten an den Mobilitätsdienst umfasst.

10. Nichtflüchtiges computerlesbares Medium bzw. nichtflüchtige computerlesbare Medien nach einem der Ansprüche 7-9, wobei die Operationen ferner Fusionieren von aus den Umgebungsinformationen und den Sensordaten abgeleiteten Daten umfassen, wobei die Bestimmung der Anpassung auf den fusionierten Daten basiert.

11. Verfahren (900), das durch eine Hardwareverarbeitungsschaltungsanordnung einer Recheneinrichtung durchgeführt wird, umfassend:
Empfangen (910) einer Anforderung von einem Mobilitätsdienst zum Durchführen eines Dienstes an einem Dienststandort (120);
Bestimmen (920), dass ein aktueller Standort einer Dienstausrüstung (118; 404), die an einem autonomen Fahrzeug, AV (102; 406), angebracht ist, mit dem Dienststandort (120) übereinstimmt;
Empfangen einer ersten Nachricht von dem AV (102; 406), wobei die erste Nachricht eine Steuerübergabe von dem AV (102; 406) an die Recheneinrichtung (202; 1000) angibt;
Empfangen (930), von dem AV (102; 406), von Umgebungsinformationen, die eine Umgebung in der Nähe des AV (102; 406) angeben;
Empfangen (940) von Sensordaten (408A) von einem in der Dienstausrüstung (118; 404) integrierten Sensor (206);
Fusionieren von aus den Umgebungsinformationen und den Sensordaten (408A) abgeleiteten Daten;
Bestimmen (950), basierend auf den fusionierten Daten, einer Positionsanpassung an dem Dienststandort (120), wobei die Bestimmung der Positionsanpassung als Reaktion auf die Steuerübergabe erfolgt;
Senden (960) eines Befehls an das AV (102; 406) zur Bewegung von dem Dienststandort (120) zu einem neuen Standort basierend auf der Positionsanpassung;
Detektieren des Abschlusses einer Aufgabe in Bezug auf den Dienst; und
Senden einer zweiten Nachricht an das AV (102; 406), wobei die zweite Nachricht angibt, dass die Recheneinrichtung (202; 1000) die Steuerung des AV (102; 406) aufgibt, wobei das Senden der zweiten Nachricht als Reaktion auf den detektierten Abschluss erfolgt.

## Revendications

1. Appareil informatique (202 ; 1000) comprenant :
des circuits de traitement matériels (1002) ; et
une ou plusieurs mémoires logicielles (1004 ; 1006) stockant des instructions qui, lorsqu'elles sont exécutées, configurent les circuits de traitement matériels (1002) pour effectuer des opérations comprenant :
la réception d'une demande provenant d'un service de mobilité pour effectuer un service à un emplacement de service (120) ;
la détermination du fait qu'un emplacement actuel de l'équipement de service (118 ; 404) fixé à un véhicule autonome, AV (102 ; 406), correspond à l'emplacement de service (120) ; la réception d'un premier message provenant de l'AV (102 ; 406), le premier message indiquant un transfert de contrôle de l'AV (102 ; 406) à l'appareil informatique (202 ; 1000) ;
la réception, en provenance de l'AV (102 ; 406), d'informations sur l'environnement indiquant un environnement proche de l'AV (102 ; 406) ;
la réception, en provenance d'un capteur (206) intégré à l'équipement de service (118 ; 404), de données de capteur (408A) ;
la fusion de données dérivées des informations sur l'environnement et des données de capteur (408A) ;
la détermination, sur la base des données fusionnées, d'un ajustement de position à l'emplacement de service (120), la détermination de l'ajustement de position se faisant en réponse au transfert de contrôle ;
l'envoi d'une commande à l'AV (102 ; 406) pour se déplacer de l'emplacement de service (120) à un nouvel emplacement en fonction de l'ajustement de position ;
la détection de l'achèvement d'une tâche liée au service ; et
l'envoi d'un second message à l'AV (102 ; 406), le second message indiquant que l'appareil informatique (202 ; 1000) abandonne le contrôle de l'AV (102 ; 406), l'envoi du second message étant en réponse à l'achèvement détecté.

2. Appareil informatique (202 ; 1000) selon la revendication 1, les opérations comprenant en outre la réception d'une commande provenant du service de mobilité et l'exécution de la commande reçue.

3. Appareil informatique (202 ; 1000) selon la revendication 2, la commande demandant à l'équipement de service de fournir des données de capteur au service de mobilité, et l'exécution de la commande reçue comprenant l'envoi des données de capteur au service de mobilité.

4. Appareil informatique (202 ; 1000) selon l'une quelconque des revendications précédentes, les informations sur l'environnement définissant un modèle environnemental, le modèle environnemental définissant des objets occupant un espace vectoriel, l'espace vectoriel représentant une zone proche de l'AV, les opérations comprenant en outre l'ajout d'un objet à l'espace vectoriel sur la base des données du capteur, la détermination de l'ajustement étant basée sur l'espace vectoriel comprenant l'objet ajouté.

5. Appareil informatique (202 ; 1000) selon l'une quelconque des revendications précédentes, les opérations comprenant en outre la mise hors tension du capteur en réponse à l'abandon du contrôle et la mise sous tension du capteur en réponse au transfert de contrôle.

6. Appareil informatique (202 ; 1000) selon l'une des revendications précédentes, les opérations comprenant en outre l'envoi d'une commande à l'AV pour modifier un niveau d'éclairage d'un ou de plusieurs feux sur l'AV.

7. Au moins un support non transitoire lisible par machine comprenant des instructions qui, lorsqu'elles sont exécutées, configurent les circuits de traitement matériels (1002) d'un appareil informatique (202 ; 1000) pour effectuer des opérations comprenant :
la réception d'une demande provenant d'un service de mobilité pour effectuer un service à un emplacement de service (120) ;
la détermination du fait qu'un emplacement actuel de l'équipement de service (118 ; 404) fixé à un véhicule autonome, AV (102 ; 406), correspond à l'emplacement de service (120) ;
la réception d'un premier message provenant de l'AV (102 ; 406), le premier message indiquant un transfert de contrôle de l'AV (102 ; 406) à l'appareil informatique (202 ; 1000) ;
la réception, en provenance de l'AV (102 ; 406), d'informations sur l'environnement indiquant un environnement proche de l'AV (102 ; 406) ;
la réception, en provenance d'un capteur (206) intégré à l'équipement de service (118 ; 404), de données de capteur (408A) ;
la fusion de données dérivées des informations sur l'environnement et des données de capteur (408A) ;
la détermination, sur la base des données fusionnées, d'un ajustement de position à l'emplacement de service (120), la détermination de l'ajustement de position se faisant en réponse au transfert de contrôle ; et
l'envoi d'une commande à l'AV (102 ; 406) pour se déplacer de l'emplacement de service (120) à un nouvel emplacement en fonction de l'ajustement de position ;
la détection de l'achèvement d'une tâche liée au service ;
l'envoi d'un second message à l'AV (102 ; 406), le second message indiquant que l'appareil informatique (202 ; 1000) abandonne le contrôle de l'AV (102 ; 406), l'envoi du second message étant en réponse à l'achèvement détecté.

8. Support ou supports non transitoire(s) lisible(s) par ordinateur selon la revendication 7, les opérations comprenant en outre la réception d'une commande provenant du service de mobilité et l'exécution de la commande reçue.

9. Support ou supports non transitoire(s) lisible(s) par ordinateur selon la revendication 8, la commande demandant à l'équipement de service de fournir des données de capteur au service de mobilité, et l'exécution de la commande reçue comprenant l'envoi des données de capteur au service de mobilité.

10. Support ou supports non transitoire(s) lisible(s) par machine selon l'une quelconque des revendications 7 à 9, les opérations comprenant en outre le fusionnement de données dérivées des informations sur l'environnement et des données de capteur, la détermination de l'ajustement étant basé sur les données fusionnées.

11. Procédé (900) effectué par des circuits de traitement matériels d'un appareil informatique, comprenant :
la réception (910) d'une demande provenant d'un service de mobilité pour effectuer un service à un emplacement de service (120) ;
la détermination (920) du fait qu'un emplacement actuel de l'équipement de service (118 ; 404) fixé à un véhicule autonome, AV (102 ; 406), correspond à l'emplacement de service (120) ;
la réception d'un premier message provenant de l'AV (102 ; 406), le premier message indiquant un transfert de contrôle de l'AV (102 ; 406) à l'appareil informatique (202 ; 1000) ;
la réception (930), en provenance de l'AV (102 ; 406), d'informations sur l'environnement indiquant un environnement proche de l'AV (102 ; 406) ;
la réception (940), d'un capteur (206) intégré à l'équipement de service (118 ; 404), de données de capteur (408A) ;
la fusion de données dérivées des informations sur l'environnement et des données de capteur (408A) ;
la détermination (950), sur la base des données fusionnées, d'un ajustement de position à l'emplacement de service (120), la détermination de l'ajustement de position se faisant en réponse au transfert de contrôle ; l'envoi (960) d'une commande à l'AV (102 ; 406) pour se déplacer de l'emplacement de service (120) à un nouvel emplacement en fonction de l'ajustement de position ;
la détection de l'achèvement d'une tâche liée au service ; et
l'envoi d'un second message à l'AV (102 ; 406), le second message indiquant que l'appareil informatique (202 ; 1000) abandonne le contrôle de l'AV (102 ; 406), l'envoi du second message étant en réponse à l'achèvement détecté.
